# EUROPÄISCHE PATENTSCHRIFT

(11) **EP 3 910 529 B1**
(45) Veröffentlichungstag und Bekanntmachung des Hinweises auf die Patenterteilung: **03.07.2024**
(21) Anmeldenummer: 21171541.2
(22) Anmeldetag: 30.04.2021
(51) Int. Cl.: G06K 7/10

(54) **VERFAHREN ZUR ÖRTLICHEN ERFASSUNG UND VERFOLGUNG VON RFID-TRANSPONDERN MITTELS EINER LESEGERÄTEANORDNUNG**
METHOD FOR LOCAL DETECTION AND TRACKING OF RFID TRANSPONDERS USING A READER DEVICE
PROCÉDÉ DE DÉTECTION ET DE SUIVI LOCAUX DES TRANSPONDEURS RFID AU MOYEN D'UN AGENCEMENT DE LECTEUR

(30) Priorität: 13.05.2020 DE 102020112921
(43) Veröffentlichungstag der Anmeldung: 17.11.2021
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE); Ostermeier, Christian, 32469 Petershagen (DE)
(74) Vertreter: Patentanwälte Thömen & Körner

(56) Entgegenhaltungen:
- EP-A1- 2 264 644
- US-A1- 2006 092 040
- US-A1- 2010 237 995

## Beschreibung

Die Erfindung betrifft ein Verfahren zur örtlichen Erfassung und Verfolgung von RFID-Transpondern mittels einer Lesegeräteanordnung nach dem Oberbegriff des Anspruchs 1.

Zur Lokalisierung von Personen und Gegenständen eignen sich Transpondersysteme aus einem stationären oder mobilen Lesegerät und von den jeweiligen Personen oder Gegenständen mitgeführten Transponder. Beim Eintritt in ein Lesefeld des Lesegeräts werden Transponder von einem Ruhezustand geweckt und senden ein initiales Antwortsignal, aus dem das Lesegerät auswertet, dass sich ein Transponder im Lesefeld befindet und um welchen Transponder es sich handelt. Außerdem wird registriert, wenn der Transponder das Lesefeld verlassen hat. Durch mehrere Lesegeräte an unterschiedlichen Orten kann außerdem der Weg verfolgt werden, den Personen oder Gegenstände mit Transpondern zurücklegen. Bisher musste allerdings der Transponder ein vorangehendes Lesefeld verlassen haben und wieder in einen Ruhezustand ohne Feld zurückgekehrt sein, damit er nach Aufwecken aus dem Ruhezustand durch ein neues Leserfeld wieder ein initiales Antwortsignal sendete. Überlappende Aufweckfelder waren nicht möglich. Die Lesegeräte mussten daher weit genug auseinander angeordnet sein, damit diese Voraussetzungen erfüllt waren. Dabei ist allerdings die Genauigkeit der Lokalisierung der Transponder sehr unscharf und die Bewegungsrichtung war nicht klar erkennbar, da jedes Aufweckfeld von einem undefinierten Bereich umgeben sein musste.

US 2003/030568 A1 ist im Oberbegriff von Anspruch reflektiert.

Der Erfindung liegt die Aufgabe zugrunde, ein Verfahren zur örtlichen Erfassung und Verfolgung von RFID-Transpondern anzugeben, das genauere Ergebnisse erzielt.

Diese Aufgabe wird bei einem Verfahren nach dem Oberbegriff des Anspruchs 1 durch die Merkmale dieses Anspruchs gelöst.

Weiterbildungen und vorteilhafte Ausgestaltungen ergeben sich aus den Unteransprüchen.

Bei dem erfindungsgemäßen Verfahren werden wenigstens zwei Lesegeräte eingesetzt, die jeweils in einem LF-Frequenzbereich zu Transpondern senden und in einem UHF-Frequenzbereich Signale von Transpondern empfangen. Es wird von jedem Lesegerät alternierend während eines ersten Zeitabschnitts ein elektromagnetisches Feld im LF-Frequenzbereich erzeugt und ein Datentelegramm an Transponder gesendet und während eines zweiten Zeitabschnitts werden Transponderaussendungen im UHF-Frequenzbereich empfangen. Die Lesegeräte werden außerdem derart miteinander synchronisiert, dass ihre ersten Zeitabschnitte überlappungsfrei aufeinanderfolgen.

Dadurch wird eine gegenseitige Störung der Lesegeräte vermieden, was Voraussetzung dafür ist, dass die Lesegeräte in unmittelbarer Nachbarschaft nebeneinander angeordnet werden können und sich dabei ihre Lesefelder örtlich überlappen. Ein Lesefeld im LF-Frequenzbereich kann geometrisch gut begrenzt werden, so dass reproduzierbare Ergebnisse für ein Vorhandensein von Transpondern im Lesefeld erzielt werden können. Die Lesegeräte werden derart positioniert, dass ein Überlappungsbereich entsteht, der als Grenzzone dient. Aus dem Übertritt der Grenzzone in eines der Lesefelder außerhalb der Grenzzone kann die Bewegungsrichtung des Transponders ermittelt werden.

Jedem Transponder wird im LF-Frequenzbereich auch eine Ortsinformation des Lesegeräts übermittelt und im Transponder zwischengespeichert. Die nachfolgend im UHF-Bereich von den Transpondern zum Lesegerät gesendeten Antworten einschließlich der enthaltenen Ortsinformationen werden vom Lesegerät ausgewertet. Aus der Reihenfolge, in der die Felder der Lesegeräte für denselben Transponder einzeln oder gemeinsam eingenommen oder verlassen werden, wird der Aufenthaltsort und die Bewegungsrichtung des Transponders bestimmt.

Die zweiten Zeitabschnitte, in denen die Lesegeräte UHF-Antworten der Transponder empfangen, können so bemessen werden, dass sie mit den Zeiten, in denen UHF-Antworten der Transponder empfangen werden, korrespondieren. Je nach Ausführung können diese zweiten Zeitabschnitte auf die ersten Zeitabschnitte folgen oder sich auch mit den ersten Zeitabschnitten überlappen, indem sie vor Ende der ersten Zeitabschnitte beginnen. Eine Einteilung des Empfangsbetriebs der UHF-Empfänger der Lesegeräte in Zeitabschnitte ist zwar nicht zwingend erforderlich, kann aber aus Gründen der Energieersparnis sinnvoll sein. Es ist jedoch auch möglich, die UHF-Empfänger der Lesegeräte ununterbrochen zu betreiben.

Weiterhin ist der jeweilige erste Zeitabschnitt in eine Antikollisionsphase zu Beginn und ein anschließendes Gruppentelegramm unterteilt. In der Antikollisionsphase werden neu in das Feld eingetretene RFID-Transponder geweckt. Die geweckten RFID-Transponder würfeln danach einen von mehreren vorgegebenen Zeitschlitzen nach einem Zufallsprinzip aus und senden jeweils im zweiten Zeitabschnitt in dem ausgewürfelten Zeitschlitz eine Transponderkennung. Wird die Transponderkennung vom Lesegerät kollisionsfrei gelesen, so wird der Transponder als im Lesefeld des Lesegeräts befindlich erfasst. Anderenfalls wird der Transponder erneut zum Auswürfeln eines Zeitschlitzes aufgefordert. Weiterhin wird dem Transponder eine Gruppeninformation mit einem Zeitschlitz zugewiesen und im Gruppentelegramm im nachfolgenden ersten Zeitabschnitt übermittelt. Die gleiche Gruppe und der gleiche Zeitschlitz wird auch von den anderen miteinander synchronisierten Lesegeräten für denselben Transponder reserviert. Dadurch kann der Transponder beim Übertritt in das Lesefeld eines benachbarten synchronisierten Lesegeräts ohne erneutes Wecken sofort in dem ihm zugeordneten Zeitschlitz angesprochen werden. Die Gruppeninformation ist dabei identisch, nur die Ortsinformation ändert sich. Da die Lesegeräte zeitversetzt senden und empfangen, ist jeder einmal geweckte Transponder dauerhaft in Lese- und Sendebereitschaft.

Bei neu in ein Lesefeld eingetretenen Transpondern, die in einer Antikollisionsphase Zeitschlitze nach einem Zufallsprinzip auswürfeln, können im zweiten Zeitabschnitt eine begrenzte Anzahl dieser Transponder gleichzeitig registriert werden.

Vorzugsweise werden Transponder mit vom Lesegerät erfasster Transponderkennung in Zeitabständen regelmäßig vom Lesegerät adressiert und angesprochen und ihre Antworten ausgewertet. Ein aufeinanderfolgendes mehrmaliges Ausbleiben von Antworten wird als Verlassen des Lesefeldes gewertet und bei Abwesenheit in allen Lesefeldern, deren Lesegeräte miteinander synchronisiert sind, werden die für diesen Transponder reservierten Zeitschlitze freigegeben.

Durch das mehrmalige Adressieren und Ansprechen wird sichergestellt, dass noch in einem Lesefeld befindliche Transponder bei Störungen des Lesevorgangs, insbesondere durch Kollisionen ihrer Aussendungen mit neu in das Lesefeld eingetretenen Transpondern, weiterhin als anwesend gelten, auch wenn ein- oder zweimal keine Kommunikation zwischen Transponder und Lesegerät stattgefunden hat.

Weiterhin ist vorgesehen, dass die Lesegeräte nach dem Master-Slave-Prinzip kommunizieren, in dem das zweite und auch jedes weitere Lesegerät als Slave vom ersten Lesegerät als Master gesteuert und synchronisiert wird.

Dadurch wird erreicht, dass die Lesegeräteanordnung autark durch eines der Lesegeräte gesteuert und synchronisiert wird und damit auf eine externe übergeordnete Steuerung verzichtet werden kann.

Bei einer bevorzugten Ausgestaltung wird das vom als Master deklarierten Lesegerät gesendete Telegramm gleichzeitig zur Synchronisation des als Slave deklarierten Lesegeräts verwendet.

Durch diese Maßnahme wird erreicht, dass die Synchronisation ohne zusätzliche Dateninformationen erfolgen kann, somit keine zusätzliche Zeit gegenüber der Kommunikation zwischen Transpondern und Lesegeräten benötigt wird und gerade die im LF-Frequenzbereich nur geringe mögliche Datenrate optimal genutzt werden kann.

Bei dem erfindungsgemäßen Verfahren können während einer Antikollisionsphase bis zu drei Transponder innerhalb desselben Zeitabschnitts erfasst werden. Umgruppierte Transponder nehmen anschließend nicht mehr am Kollisionsverfahren teil.

Damit lassen sich die in der Praxis am häufigsten auftretenden Ereignisse beherrschen, so dass die neu in ein Lesefeld eingetretenen Transponder bereits beim nächstfolgenden Gruppentelegramm individuell angesprochen werden können.

Insbesondere gehören alle Transponder, deren Transponderkennungen noch nicht erfasst sind, einer von den Lesegeräten nicht zugeordneten Gruppe an, insbesondere Gruppen 0. Nach Erfassen der Transponderkennungen werden die Transponder einer von der nicht zugeordneten Gruppe abweichenden indizierten Gruppe zugeordnet. Dabei kann jede Gruppe 16 Zeitschlitze zum Adressieren von maximal 16 Transponder derselben Gruppe umfassen, die während des ersten Zeitabschnitts adressiert werden.

Durch Schaffung dieser Systematik von Gruppenzugehörigkeiten lassen sich einerseits Transponder, die erfasst sind, von solchen, die noch nicht erfasst sind, unterscheiden und andererseits durch Schaffung weiterer Gruppen eine Vielzahl von Transpondern verwalten. Sofern gleichzeitig nur 16 Transponder verwaltet werden müssen, kommt das Verfahren mit einer Gruppe aus, wodurch kurze Reaktionszeiten bei Veränderungen erzielt werden. Bei mehr als 16 Transpondern gleichzeitig allerdings, deren Verwaltung mehr als eine indizierte Gruppe erfordern, verlängern sich die Reaktionszeiten.

Beim erfindungsgemäßen Verfahren sind die ersten und zweiten Zeitabschnitte, also die LF- und UHF-Zeitabschnitte, gleich lang.

Das hat den Vorteil, dass zum Lesen und Ansprechen gleich lange Zeiten zur Verfügung stehen und somit die Zeiträume und Funkkanäle optimal genutzt werden können.

Vorzugsweise werden von den als Master und als Slave betriebenen Lesegeräten dieselben Lesegerätekennungen aber unterschiedliche Ortsinformationen übertragen.

Das Verfahren kann damit ohne Änderung des Protokolls der Lesegerätekennungen auf Lesegeräteanordnungen mit mehr als zwei Lesegeräten erweitert werden. Es werden dabei lediglich weitere Ortsinformationen übermittelt.

Die Lesegeräte können durch Synchronisation und Auswertung Bewegungsrichtung und Position eines Transponders ermitteln.

Nachfolgend wird die Erfindung anhand eines Ausführungsbeispiels erläutert, das in der Zeichnung dargestellt ist. Darin zeigen:
- Fig. 1: den prinzipiellen Aufbau einer Lesegeräteanordnung aus zwei Lesegeräten, von denen sich das eine in einem ersten Raum und das andere in einem zweiten Raum befinden, sowie mehrere Transponder,
- Fig. 2: den zeitlichen Ablauf der Felderzeugung zweier Lesegeräte, noch ohne Inventarisierung,
- Fig. 3: eine Darstellung der Lesefelder und der empfangbaren Kommandos,
- Fig. 4: die Erweiterung des Verfahrens um Inventarisierung, mit Antikollisionsund Gruppentelegrammen,
- Fig. 5: die komplette Ausnutzung beider Funkstrecken im LF- und UHF-Frequenzbereich nach dem erfindungsgemäßen Verfahren,
- Fig. 6: exemplarisch den Weg zweier Transponder durch die Lesegeräteanordnung.

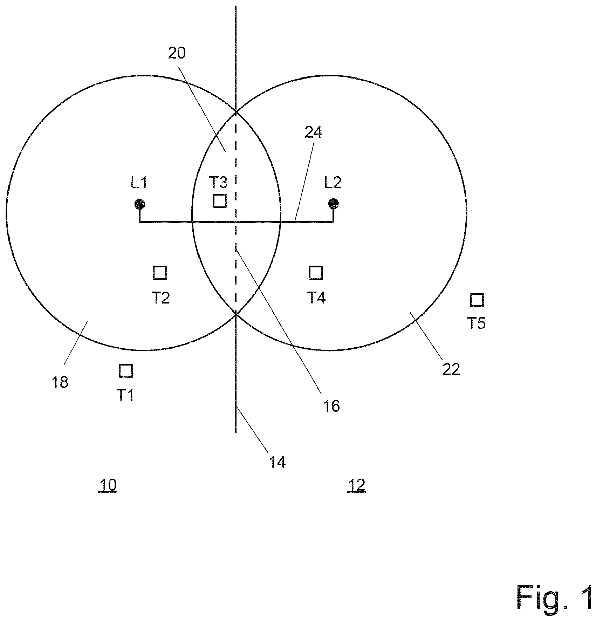

Fig. 1 zeigt den prinzipiellen Aufbau einer Lesegeräteanordnung aus zwei Lesegeräten L1, L2, von denen sich das eine L1 in einem ersten Raum 10 und das andere L2 in einem zweiten Raum 12 befinden. Die Räume 10, 12 sind durch eine Wand 14 getrennt. Ein Durchgang 16 ermöglicht den Übertritt von einem zum anderen Raum. Um den Aufenthalt in einem der Räume und den Übertritt von einem zum anderen Raum zu überwachen, befinden sich die Lesegeräte L1, L2 in den Räumen 10, 12 in der Nähe des Durchgangs 16. Vorzugsweise sind sie auf einer Mittellinie durch den Durchgang mit einem solchen Abstand zum Durchgang angeordnet, dass ihre Lesefelder den Durchgang noch durchdringen. Die Lesegeräte L1, L2 senden Datentelegramme im LF-Frequenzbereich an Transponder T1, T2, T3, T4, T5 und empfangen Antworten der Transponder im UHF-Frequenzbereich. Das Feld des LF-Frequenzbereichs lässt sich recht genau eingrenzen und vorherbestimmen, da es sich mit zunehmender Entfernung von der Antenne abschwächt, aber Gebäudeteile ohne wesentliche Dämpfung durchdringt. Reflexionen und Interferenzen, die zu Nullstellen führen könnten, treten dabei nicht auf. Im Gegensatz dazu ist das Feld des UHF-Frequenzbereich weniger genau einzugrenzen, da es von Gebäudeteilen gedämpft und/oder reflektiert wird und durch Interferenzen zu Hotspots und Nullstellen führen kann.

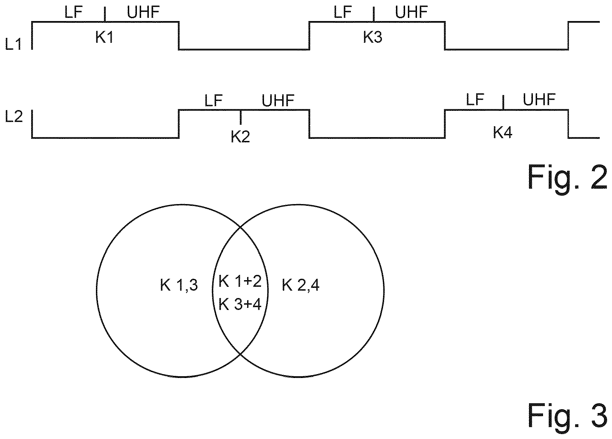

Das Lesegerät L1 erzeugt ein Lesefeld 18, das als Kreis dargestellt ist, im Wesentlichen in dem Raum 10 herrscht und ein wenig in den Raum 12 hineinragt. Das Lesegerät L2 erzeugt ein Lesefeld 22, das ebenfalls als Kreis dargestellt ist, im Wesentlichen in dem Raum 12 herrscht und ein wenig in den Raum 10 hineinragt. An der Stelle des Durchgangs 16 gibt es einen Überlappungsbereich 20, in dem beide Lesefelder 18 und 22 von Transpondern gleichzeitig empfangen werden können. Die beiden Lesegeräte L1, L2 sind durch eine Synchronisationsleitung 24 miteinander verbunden. Dabei übernimmt das Lesegerät L1 die Aufgabe eines Masters und das Lesegerät L2 die Aufgabe eines Slaves. Ein externer Controller ist daher nicht erforderlich. Zusätzlich zu dem Lesegerät L2 können auch noch weitere Lesegeräte ergänzt werden, die dann ebenfalls die Rolle eines Slaves übernehmen und vom Master, dem Lesegerät L1 gesteuert werden. In Fig. 2 sind ferner mehrere Transponder T1, T2, T3, T4 und T5 dargestellt, die von Personen getragen werden oder an Gegenständen befestigt sein können. Nachfolgend wird erläutert, wie der Aufenthaltsort der Transponder und ihre Bewegungsrichtung durch die Lesegeräte ermittelt werden kann.

Fig. 2 zeigt den zeitlichen Verlauf von Datentelegrammen zweier Lesegeräte noch ohne Inventarisierung aber mit Anwesenheits- und Richtungserkennung. Der obere Verlauf zeigt die Datentelegramme des Lesegeräts L1, das als Master betrieben wird, und der untere Verlauf die Datentelegramme des Lesegeräts L2, das als Slave betrieben wird. Die Aktionen der Lesegeräte L1 und L2 sind gegenseitig um eine halbe Periode verschoben. Ist das Lesegerät L1 aktiv, dann ist das Lesegerät L2 passiv und umgekehrt. Die Lesefelder der beiden Lesegeräte L1 und L2 stören sich somit nicht gegenseitig. In diesem Ausführungsbeispiel befindet sich das jeweils aktive Lesegerät zuerst im Sendemodus und sendet ein Datentelegramm im LF-Frequenzbereich und anschließend im Empfangsmodus und empfängt Datentelegramme von Transpondern im UHF-Frequenzbereich.

Fig. 3 zeigt zwei von zwei Lesegeräten L1 und L2 ausgeleuchteten Lesefelder. Die beiden Lesefelder um die Lesegeräte L1 und L2 als Zentrum bilden einen Überlappungsbereich 20. Transponder ausschließlich im Feld des Lesegeräts L1 werden durch Kommandos K1 und K3 angesprochen und, Transponder ausschließlich im Feld des Lesegeräts L2 durch Kommandos K3 und K4, sowie Transponder im Überlappungsbereich 20 durch alle vier Kommandos K1, K2, K3, K4. Bereits hier ist eine Anwesenheits- und Richtungserkennung durch die Lesegeräteanordnung möglich.

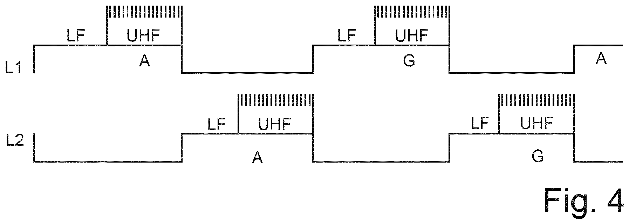

Fig. 4 zeigt einen zeitlichen Verlauf von Datentelegrammen zweier Lesegeräte mit Inventarisierung. Tritt ein Transponder in das Lesefeld eines Lesegeräts ein, zum Beispiel der Transponder T1 in das Lesefeld 10 des Lesegeräts L1, so wird er durch das elektromagnetische Feld im LF-Frequenzbereich geweckt und wechselt von einem Schlafmodus in einen Wachmodus. Zu diesem Zeitpunkt hat er vom Lesegerät L1 noch keine Gruppeninformation erhalten und befindet sich automatisch in einer Gruppe 0. Transponder der Gruppe 0 antworten auf sogenannte Antikollisionskommandos A. Auf ein solches Antikollisionskommandos A würfelt der Transponder nach einem Zufallsprinzip einen von 16 möglichen Zeitschlitzen aus, in dem er seine Transponderkennung an das Lesegerät L1 überträgt, sobald dieses in den Empfangsmodus wechselt. Es ist möglich, dass mehrere Transponder gleichzeitig in das Lesefeld treten und ebenfalls einen von 16 möglichen Zeitschlitzen auswürfeln. Wenn diese Zeitschlitze unterschiedlich und frei sind, besteht die Chance, dass das Lesegerät L1 die Transponder gleichzeitig antikollisionsfrei empfängt, sortiert und registriert. Im nächsten Sendemodus des Lesegeräts L1 erhalten die neu antikollisionsfrei empfangenen Transponder eine Gruppeninformation und jeweils einen freien Zeitschlitz zugeordnet. Diese Transponder antworten auf Gruppenkommandos G dann nicht mehr als Gruppe 0, sondern auf Telegramme für die ihnen zugeordnete Gruppe, zum Beispiel Gruppe G1. Außerdem überträgt das Lesegerät L1 noch seine Ortsinformation, die ebenfalls vom Transponder gespiegelt, also zurück übertragen wird und bei ansonsten gleicher Gruppeninformation erkennen lässt, in welchem der beiden Lesefelder sich der Transponder befindet.

Durch die Synchronisierungsleitung 24 wird auch das andere Lesegerät L2 über die Reservierung des Zeitschlitzes informiert, so dass dieser Zeitschlitz nicht fälschlich einem in das Lesefeld 12 eintretenden Transponder zugewiesen wird. So wird der Zeitschlitz auch dann nicht neu zugewiesen, wenn das jeweils andere Lesegerät die UHF-Antwort des Transponders nicht empfangen haben sollte. Die Zuordnung eines Transponders zum Zeitschlitz ist also beiden Lesern schon bekannt, sodass keine erneute Antikollision stattfinden muss. Solange die Zahl der insgesamt von den beiden Lesegeräten L1 und L2 verwalteten Transponder nicht größer als 16 ist, kommt die Lesegeräteanordnung mit einer Gruppe aus. Bei mehr als 16 Transpondern müsste dann eine weitere Gruppe, zum Beispiel G2 erzeugt werden.

Wird der Transponder in den Durchgang 16 verlagert, in dem sich die beiden Lesefelder 10 und 12 zu dem Überlappungsbereich 20 überschneiden, so empfängt der Transponder Datentelegramme von beiden Lesegeräten L1 und L2 und antwortet auf beide. Aus der Synchronisation der Lesegeräte L1 u. L2 und der Übertragung beider Ortsinformationen der Lesegeräte L1 plus L2 wird erkannt, dass sich der Transponder in dem Überlappungsbereich 20 befindet, der zum Beispiel eine Demarkationslinie zwischen einem zulässigen Raum und einem verbotenen Raum darstellt. Bei einer weiteren Verlagerung ausschließlich in das Lesefeld 12 empfängt der Transponder nur noch die Ortsinformation des Lesegeräts L2. Die Lesegeräte L1, L2 können durch die Synchronisation und aus der Abfolge der übertragenen Ortsinformationen dann die Bewegungsrichtung des Transponders erkennen, nämlich dass er die Demarkationslinie vom Lesefeld 10 in Richtung des Lesefelds 12 passiert hat. Damit ist die Lesegeräteanordnung in der Lage, sowohl die Bewegungsrichtung als auch die letzte Position eines Transponders an ein übergeordnetes System zu übertragen.

Wird der Transponder weiter in Fig. 1 nach rechts verlagert und verlässt auch das Lesefeld 12, dann antwortet er nicht mehr auf Telegramme der Lesegeräte L1, L2. Falls das Nichtantworten auf Kollisionen mit neu in das Lesefeld eingetretenen Transpondern beruht, die zufällig den gleichen Zeitschlitz ausgewürfelten haben, oder durch externe Störquellen verursacht wurde, werden noch einige Sende- und Empfangsperioden daraufhin abgewartet, ob sich der Transponder noch wieder meldet. Nach mehrmaligem Ausbleiben von Antworten, deren Zahl individuell eingestellt werden kann, wird der Transponder als nicht mehr vorhanden betrachtet und der Zeitschlitz von beiden Lesegeräten L1, L2 freigegeben.

Bei der Konstellation der in Fig. 1 dargestellten Transponder T1 bis T5 befinden sich die beiden Transponder T1 und T5 außerhalb der Lesefelder der Lesegeräte L1 und L2. Der Transponder T2 befindet sich im Lesefeld 10, der Transponder T4 im Lesefeld 12 und der Transponder T3 im Überlappungsbereich der beiden Lesefelder 10 und 12. Im stationären Zustand würden dann in Fig. 2 drei Zeitschlitze belegt. Im Beispiel die Zeitschlitze 1, 3 und 16. Zusammen mit den Ortskennungen empfängt der Transponder T2 Gruppentelegramme des Lesegeräts L1, der Transponder T3 Gruppentelegramme der Lesegeräte L1 und L2 und der Transponder T4 Gruppentelegramme des Lesegeräts L2. Die Zeitschlitze 1, 3 und 16 sind dabei für beide Lesegeräte reserviert, damit bei einem möglichen Wechsel des Transponders in ein anderes Lesefeld der Transponder im gleichen Zeitschlitz vom anderen Lesegerät angesprochen werden kann.

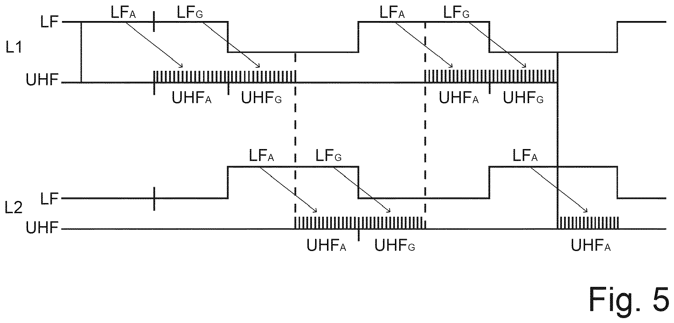

Fig. 5. zeigt als weitere Variante einen zeitlichen Verlauf von Datentelegrammen zweier Lesegeräte mit Inventarisierung, bei der die Reaktionsgeschwindigkeit weiter erhöht wird. Antikollisions- und Gruppentelegramm werden vom jeweiligen Lesegerät L1, L2 direkt hintereinander gesendet. Jedes Lesegerät L1; L2 sendet im LF-Frequenzbereich und empfängt im UHF-Frequenzbereich nicht mehr zu unterschiedlichen Zeiten, sondern teilweise gleichzeitig. In derselben Zeitspanne, die bei den vorangegangenen Ausführungen jeweils zum Senden eines Antikollisionstelegram LFA und Empfang der UHF-Antwort UHFA der Transponder bzw. zum Senden eines Gruppenkommandos LFG und Empfang der UHF-Antwort UHFG der Transponder T1, T2 verwendet wurde, senden die Lesegeräte L1, L2 das Antikollisionstelegram LFA, und das Gruppentelegram LFG unmittelbar hintereinander. Während das Lesegerät L1 die UHF-Antworten UHFA der Transponder auf das Antikollisionstelegram LFA empfängt, wird parallel im LF-Frequenzbereich bereits das Gruppentelegram LFG gesendet. Weiterhin beginnt das Lesegerät L2 bereits mit seinem Antikollisionstelegram LFA während das Lesegerät L1 die UHF-Antworten UHFG auf das Gruppentelegram LFG empfängt. Entsprechendes gilt umgekehrt. Beide Funkkanäle sind so stets genutzt und die Reaktionszeit des Systems erhöht sich.

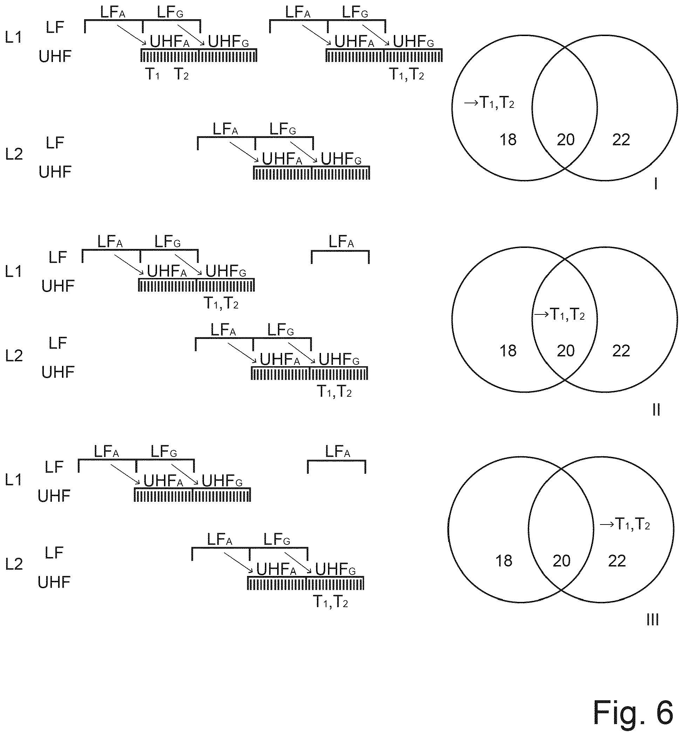

Fig. 6 zeigt den kompletten Weg zweier Transponder durch das System gemäß dem Verfahren der Erfindung.
I. Die Transponder T1 und T2 treten in das Lesefeld 18 des Lesegeräts L1 ein und antworten auf dessen Antikollisionstelegramm auf einem zufällig gewürfelten Zeitschlitz. Das System meldet, dass zwei Transponder im Bereich des Lesegeräte L1 befindlich sind. Im nächsten Antikollisionstelegramm des Masters werden sie einem festen Zeitschlitz zugeordnet und antworten in diesem auf das Gruppentelegramm.
II. Bewegen sich die Transponder weiter in den Überlappungsbereich zwischen beiden Lesegeräten und, ist keine erneute Inventarisierung notwendig. Die Transponder antworten sowohl dem Lesegerät L1 als auch dem Lesegerät L2 auf die Gruppentelegramme im festen Schlitz. Das System meldet, dass sich die Transponder T1 u. T2 vom Lesefeld 18 des Lesegerätes L1 in den Überlappungsbereich 20 bewegt haben.
III. Die Transponder haben sich in das Lesefeld 22 des Lesegerätes L2 bewegt. Sie antworten nur noch auf dessen Gruppentelegramm in ihrem festen Zeitschlitz. Das System meldet, dass sich die Transponder in den Bereich des Lesefelds 22 des Lesegerätes L2 bewegt haben.

### Bezugszeichenliste

| | | | |
|---|---|---|---|
| 10 | Raum | K4 | Kommando |
| 12 | Raum | A | Antikollisionstelegram |
| 14 | Wand | B | Gruppentelegram |
| 16 | Durchgang | LFA | LF-Antikollisionstelegram |
| 18 | Lesefeld | LFG | LF-Gruppentelegram |
| 20 | Überlappungsbereich | UHFA | UHF-Antikollisionstelegram |
| 22 | Lesefeld | UHFG | UHF-Gruppentelegram |
| 24 | Synchronisationsleitung | | |
| L1 | Lesegerät | | |
| L2 | Lesegerät | | |
| T1 | Transponder | | |
| T2 | Transponder | | |
| T3 | Transponder | | |
| T4 | Transponder | | |
| T5 | Transponder | | |
| LF | LF-Frequenzbereich | | |
| UHF | UHF-Frequenzbereich | | |
| K1 | Kommando | | |
| K2 | Kommando | | |
| K3 | Kommando | | |

## Patentansprüche

1. Verfahren zur örtlichen Erfassung und Verfolgung von RFID-Transpondern mittels einer Lesegeräteanordnung, bestehend aus wenigstens zwei Lesegeräten (L1, L2), die örtlich unterschiedliche, sich teilweise überlappende Lesefelder (18, 22) erzeugen, wobei die Lesegeräte im LF-Frequenzbereich senden und im HF Bereich Transpondersignale empfangen, wobei die im UHF-Frequenzbereich gesendeten Transponderantworten, die auch zuvor im LF-Frequenzbereich erhaltene und vom Transponder (T1, T2, T3, T4, T5) zwischengespeicherter Ortsinformationen umfassen, vom Lesegerät (L1, L2) ausgewertet werden und aus der Reihenfolge, in der die Lesefelder (18, 22) der Lesegeräte (L1, L2) für denselben Transponder (T1, T2, T3, T4, T5) einzeln oder gemeinsam eingenommen oder verlassen werden, der Aufenthaltsort und die Bewegungsrichtung des Transponders (T1, T2, T3, T4, T5) bestimmt wird, **dadurch gekennzeichnet, dass** von jedem Lesegerät (L1; L2) alternierend während eines ersten Zeitabschnitts ein elektromagnetisches Feld im LF-Frequenzbereich erzeugt und ein Datentelegramm an Transponder (T1, T2, T3, T4, T5) gesendet wird und während eines zweiten Zeitabschnitts Transponderantworten im UHF-Frequenzbereich empfangen werden, dass die Lesegeräte (L1, L2) derart miteinander synchronisiert werden, dass die ersten Zeitabschnitte der Lesegeräte überlappungsfrei aufeinanderfolgen, dass die im UHF-Frequenzbereich gesendeten Transponderantworten, die auch zuvor im LF-Frequenzbereich erhaltene und vom Transponder (T1, T2, T3, T4, T5) zwischengespeicherter Ortsinformationen umfassen, vom Lesegerät (L1, L2) ausgewertet werden, und dass aus der Reihenfolge, in der die Lesefelder (18, 22) der Lesegeräte (L1, L2) für denselben Transponder (T1, T2, T3, T4, T5) einzeln oder gemeinsam eingenommen oder verlassen werden, der Aufenthaltsort und die Bewegungsrichtung des Transponders (T1, T2, T3, T4, T5) bestimmt wird, wobei der erste Zeitabschnitt jeweils in ein Antikollisionstelegram (A) zu Beginn und ein anschließendes Gruppentelegramm (G) unterteilt ist, dass durch das Antikollisionstelegram (A) neu in das Lesefeld (18, 22) eingetretene und geweckte RFID-Transponder (T1, T2, T3, T4, T5) veranlasst werden, einen von mehreren vorgegebenen Zeitschlitzen nach einem Zufallsprinzip auswürfeln und jeweils im nachfolgenden zweiten Zeitabschnitt in dem ausgewürfelten Zeitschlitz eine Transponderkennung senden, dass vom Lesegerät (L1, L2) antikollisionsfrei gelesene Transponderkennungen erfasst und diesen Transpondern (T1, T2, T3, T4, T5) jeweils eine Gruppeninformation mit einem dort befindlichen Zeitschlitz zugewiesen wird, in dem die derselben Gruppe zugeordneten Transponder nacheinander gezielt adressiert und angesprochen werden können, derart, dass die gleiche Gruppe und der gleiche Zeitschlitz auch von den anderen miteinander synchronisierten Lesegeräten für denselben Transponder reserviert wird, wodurch bei Ortswechsel zwischen unterschiedlichen, aber miteinander synchronisierten Lesegeräten die Gruppeninformation identisch bleibt und sich nur die Ortsinformation ändert.

2. Verfahren nach Anspruch 1, **dadurch gekennzeichnet, dass** Transponder (T1, T2, T3, T4, T5) mit vom Lesegerät (L1, L2) erfasster Transponderkennung in Zeitabständen regelmäßig vom Lesegerät (L1, L2) adressiert und angesprochen und ihre Antworten ausgewertet werden und dass ein aufeinanderfolgendes mehrmaliges Ausbleiben von Antworten als Verlassen des Lesefeldes (18; 22) gewertet wird und die für diesen Transponder reservierten Zeitschlitze freigegeben werden.

3. Verfahren nach einem der Ansprüche 1 bis 2, **dadurch gekennzeichnet, dass** die Lesegeräte (L1, L2) nach dem Master-Slave-Prinzip kommunizieren, in dem das zweite Lesegerät (L2) als Slave vom ersten Lesegerät (L1) als Master gesteuert und synchronisiert wird.

4. Verfahren nach einem der Ansprüche 1 bis 3, **dadurch gekennzeichnet, dass** ein vom als Master deklarierten Lesegerät (L1) gesendetes Datentelegramm gleichzeitig zur Synchronisation des als Slave deklarierten Lesegeräts (L2) verwendet wird.

5. Verfahren nach einem der Ansprüche 2 bis 4, **dadurch gekennzeichnet, dass** während einer Antikollisionsphase umgruppierte Transponder anschließend nicht mehr am Antikollisionsverfahren teilnehmen.

6. Verfahren nach einem der Ansprüche 1 bis 5, **dadurch gekennzeichnet, dass** alle Transponder, deren Transponderkennungen noch nicht erfasst sind, einer von den Lesegeräten (L1, L2) nicht zugeordneten Gruppe, insbesondere Gruppe 0 angehören, und nach Erfassen der Transponderkennungen einer von der nicht zugeordneten Gruppe abweichenden, indizierten Gruppe zugeordnet werden.

7. Verfahren nach einem der Ansprüche 1 bis 6, **dadurch gekennzeichnet, dass** die ersten und zweiten Zeitabschnitte (LF- und UHF) gleich lang sind.

8. Verfahren nach einem der Ansprüche 1 bis 7, **dadurch gekennzeichnet, dass** von den als Master und als Slave betriebenen Lesegeräten (L1, L2) dieselben Lesegerätekennungen aber unterschiedliche Ortsinformationen übertragen werden.

9. Verfahren nach einem der Ansprüche 1 bis 8, **dadurch gekennzeichnet, dass** die Lesegeräte (L1, L2) durch Synchronisation und Auswertung Bewegungsrichtung und Position eines Transponders (T1, T2, T3, T4, T5) ermitteln.

## Claims

1. Method for locally detecting and tracking RFID transponders by means of a reader arrangement consisting of at least two readers (L1, L2) which generate locally different, partially overlapping reading fields (18, 22), wherein the readers transmit in the LF frequency range and receive transponder signals in the HF range, wherein the transponder responses, which are transmitted in the UHF frequency range and also comprise location information previously received in the LF frequency range and buffered by the transponder (T1, T2, T3, T4, T5), are evaluated by the reader (L1, L2), and the whereabouts and the direction of movement of the transponder (T1, T2, T3, T4, T5) are determined from the order in which the reading fields (18, 22) of the readers (L1, L2) are occupied or left individually or together for the same transponder (T1, T2, T3, T4, T5), **characterized in that** each reader (L1; L2) alternately generates an electromagnetic field in the LF frequency range during a first period of time and a data telegram is transmitted to transponders (T1, T2, T3, T4, T5), and transponder responses are received in the UHF frequency range during a second period of time, **in that** the readers (L1, L2) are synchronized with one another in such a manner that the first periods of time of the readers follow one another without an overlap, **in that** the transponder responses, which are transmitted in the UHF frequency range and also comprise location information previously received in the LF frequency range and buffered by the transponder (T1, T2, T3, T4, T5), are evaluated by the reader (L1, L2), and **in that** the whereabouts and the direction of movement of the transponder (T1, T2, T3, T4, T5) are determined from the order in which the reading fields (18, 22) of the readers (L1, L2) are occupied or left individually or together for the same transponder (T1, T2, T3, T4, T5), wherein the first period of time is respectively subdivided into an anti-collision telegram (A) at the beginning and a subsequent group telegram (G), **in that** RFID transponders (T1, T2, T3, T4, T5) which have newly entered the reading field (18, 22) and have been woken up are prompted by the anti-collision telegram (A) to randomize one of a plurality of predefined time slots according to a random principle and to respectively transmit a transponder identifier in the randomized time slot during the subsequent, second period of time, **in that** transponder identifiers read by the reader (L1, L2) in an anti-collision manner are detected and group information is respectively assigned to these transponders (T1, T2, T3, T4, T5) with a time slot there in which the transponders assigned to the same group can be specifically addressed and approached in succession in such a manner that the same group and the same time slot are also reserved for the same transponder by the other readers synchronized with one another, as a result of which the group information remains identical and only the location information changes in the event of a location change between different, but mutually synchronized readers.

2. Method according to Claim 1, **characterized in that** transponders (T1, T2, T3, T4, T5) with a transponder identifier detected by the reader (L1, L2) are addressed and approached by the reader (L1, L2) at regular intervals of time and their responses are evaluated, and **in that** repeated successive absence of responses is assessed as leaving of the reading field (18; 22) and the time slots reserved for this transponder are released.

3. Method according to one of Claims 1 to 2, **characterized in that** the readers (L1, L2) communicate according to the master-slave principle, in which the second reader (L2) as the slave is controlled and synchronized by the first reader (L1) as the master.

4. Method according to one of Claims 1 to 3, **characterized in that** a data telegram transmitted by the reader (L1) declared to be the master is simultaneously used to synchronize the reader (L2) declared to be the slave.

5. Method according to one of Claims 2 to 4, **characterized in that** transponders regrouped during an anti-collision phase subsequently no longer participate in the anti-collision method.

6. Method according to one of Claims 1 to 5, **characterized in that** all transponders whose transponder identifiers have not yet been detected belong to a group that is not assigned by the readers (L1, L2), in particular group 0, and, after the transponder identifiers have been detected, are assigned to an indexed group differing from the group that has not been assigned.

7. Method according to one of Claims 1 to 6, **characterized in that** the first and second periods of time (LF and UHF) are of the same length.

8. Method according to one of Claims 1 to 7, **characterized in that** the same reader identifiers, but different location information, are transmitted by the readers (L1, L2) operated as the master and as the slave.

9. Method according to one of Claims 1 to 8, **characterized in that** the readers (L1, L2) determine the direction of movement and position of a transponder (T1, T2, T3, T4, T5) by means of synchronization and evaluation.

## Revendications

1. Procédé permettant de détecter et de suivre localement des transpondeurs RFID au moyen d'un ensemble de lecteurs, composé d'au moins deux lecteurs (L1, L2) qui produisent des champs de lecture (18, 22) localement différentes qui se chevauchent en partie, les lecteurs émettant dans la plage de fréquence BF et recevant dans la plage HF des signaux de transpondeur, dans lequel les réponses de transpondeur émises dans la plage de fréquence UHF, qui comprennent aussi des informations de localisation reçues précédemment dans la plage de fréquence BF et mises en mémoire tampon par le transpondeur (T1, T2, T3, T4, T5), sont évaluées par le lecteur (L1, L2), et l'emplacement et la direction de mouvement du transpondeur (T1, T2, T3, T4, T5) sont déterminés à partir de l'ordre dans lequel les champs de lecture (18, 22) des lecteurs (L1, L2) pour le même transpondeur (T1, T2, T3, T4, T5) sont occupés ou abandonnés individuellement ou ensemble,
**caractérisé en ce que** chaque lecteur (L1, L2) génère en alternance pendant une première période un champ électromagnétique dans la plage de fréquence BF et émet un télégramme de données à des transpondeurs (T1, T2, T3, T4, T5), et reçoit pendant une deuxième période des réponses de transpondeur dans la plage de fréquence UHF, **en ce que** les lecteurs (L1, L2) sont synchronisés entre eux de telle sorte que les premières périodes des lecteurs se suivent sans chevauchement, **en ce que** les réponses de transpondeur émises dans la plage de fréquence UHF, qui comprennent aussi des informations de localisation reçues précédemment dans la plage de fréquence BF et mises en mémoire tampon par le transpondeur (T1, T2, T3, T4, T5), sont évaluées par le lecteur (L1, L2), et **en ce que** l'emplacement et la direction de mouvement du transpondeur (T1, T2, T3, T4, T5) sont déterminés à partir de l'ordre dans lequel les champs de lecture (18, 22) des lecteurs (L1, L2) pour le même transpondeur (T1, T2, T3, T4, T5) sont occupés ou abandonnés individuellement ou ensemble, dans lequel la première période est respectivement divisée en un télégramme anticollision (A) au début et en un télégramme de groupe suivant (G), **en ce que** le télégramme anticollision (A) fait que des transpondeurs RFID (T1, T2, T3, T4, T5) récemment entrés dans le champ de lecture (18, 22) et réveillés décident au hasard selon un principe aléatoire d'une parmi plusieurs tranches de temps prédéfinies et émettent un identifiant de transpondeur respectivement dans la deuxième période suivante dans la tranche de temps décidée au hasard, **en ce que** le lecteur (L1, L2) détecte des identifiants de transpondeur lus sans anticollision, et une information de groupe avec une tranche de temps qui s'y trouve est attribuée à ces transpondeurs (T1, T2, T3, T4, T5), dans laquelle les transpondeurs attribués au même groupe peuvent être adressés et interrogés de manière ciblée les uns après les autres de telle sorte que le même groupe et la même tranche de temps sont réservés aussi par les autres lecteurs synchronisés entre eux pour le même transpondeur, de manière à ce qu'en cas de changement de localisation entre lecteurs différents mais synchronisés entre eux les informations de groupe restent identiques et seule l'information de localisation change.

2. Procédé selon la revendication 1, **caractérisé en ce que** des transpondeurs (T1, T2, T3, T4, T5) ayant un identifiant de transpondeur détecté par le lecteur (L1, L2) sont adressés et interrogés à intervalles réguliers par le lecteur (L1, L2) et leurs réponses sont évaluées, et **en ce qu'**une absence répétée consécutive de réponses est considérée comme un abandon du champ de lecture (18 ; 22), et les tranches de temps réservées pour ce transpondeur sont libérées.

3. Procédé selon l'une quelconque des revendications 1 à 2, **caractérisé en ce que** les lecteurs (L1, L2) communiquent selon le principe maître/esclave dans lequel le deuxième lecteur (L2) est commandé et synchronisé en tant qu'esclave par le premier lecteur (L1) en tant que maître.

4. Procédé selon l'une quelconque des revendications 1 à 3, **caractérisé en ce qu'**un télégramme de données émis par le lecteur (L1) déclaré en tant maître est utilisé en même temps pour synchroniser le lecteur (L2) déclaré en tant qu'esclave.

5. Procédé selon l'une quelconque des revendications 2 à 4, **caractérisé en ce que** des transpondeurs remaniés pendant une phase anticollision ne participent ensuite plus au procédé anticollision.

6. Procédé selon l'une quelconque des revendications 1 à 5, **caractérisé en ce que** tous les transpondeurs dont les identifiants de transpondeur n'ont pas encore été détectés appartiennent à un groupe non attribué par les lecteurs (L1, L2), en particulier au groupe 0, et sont attribués à un groupe indexé différent du groupe non attribué une fois les identifiants de transpondeur détectés.

7. Procédé selon l'une quelconque des revendications 1 à 6, **caractérisé en ce que** les premières et deuxièmes tranches de temps (BF et UHF) sont de longueur identiques.

8. Procédé selon l'une quelconque des revendications 1 à 7, **caractérisé en ce que** les lecteurs (L1, L2) fonctionnant en tant que maître et en tant qu'esclave transmettent les mêmes identifiants de lecteur mais des informations de localisation différentes.

9. Procédé selon l'une quelconque des revendications 1 à 8, **caractérisé en ce que** les lecteurs (L1, L2) établissent par synchronisation et évaluation la direction de mouvement et de la position d'un transpondeur (T1, T2, T3, T4, T5).
